# EUROPEAN PATENT SPECIFICATION

(11) **EP 1 631 012 B1**
(45) Date of publication and mention of the grant of the patent: **15.10.2008**
(21) Application number: 05255192.6
(22) Date of filing: 24.08.2005
(51) Int. Cl.: H04L 12/28

(54) **Method for wireless transmission of data**
Verfahren zur schnurlosen Datenübertragung
Méthode pour la transmission sans fil de données

(30) Priority: 27.08.2004 KR 2004067925
(43) Date of publication of application: 01.03.2006
(73) Proprietor: Samsung Electronics Co., Ltd., Yeongtong-gu Suwon-si, Gyeonggi-do (KR)
(72) Inventor: Yun, Suk-jin, Seocho-gu, Seoul (KR); Shin, Se-young, Suwon-si, Gyeonggi-do (KR); Lee, Ho-seok, Yeongtong-gu, Suwon-si, Gyeonggi-do (KR); Choi, Hyong-uk, Gangseo-gu, Seoul (KR)
(74) Representative: Waddington, Richard

(56) References cited:
- US-A1- 2002 184 389
- US-A1- 2003 125 087
- "ANSI/IEEE Std 802.11, 1999 Edition (R2003) PART 11 :Wireless LAN Medium Access Control (MAC) and Physical Layer (PHY) Specifications" ANSI/IEEE, [Online] 12 June 2003 (2003-06-12), pages 34-88, XP002382009 Retrieved from the Internet: URL:http://ieeexplore.ieee.org/iel5/9543/3 0234/01389197.pdf?isnumber=30234> [retrieved on 2006-05-18]

## Description

Apparatuses and methods consistent with the present invention relate to wireless transmission of data. More particularly, the present invention relates to a method for a coordinator to transmit large amounts of multimedia data to a specific multimedia player in a coordinator-based wireless network.

Recent developments in communications and network technologies have changed the network environment from wired networks using wired media such as coaxial cables or optical cables to wireless networks using signals in various frequency bands. Accordingly, mobile computing apparatuses comprising wireless network interface modules and performing a specific function by processing a variety of data (hereinafter referred to as "wireless networking apparatuses") have been developed. In addition, wireless network technologies for efficient communication between wireless network apparatuses have also been introduced.

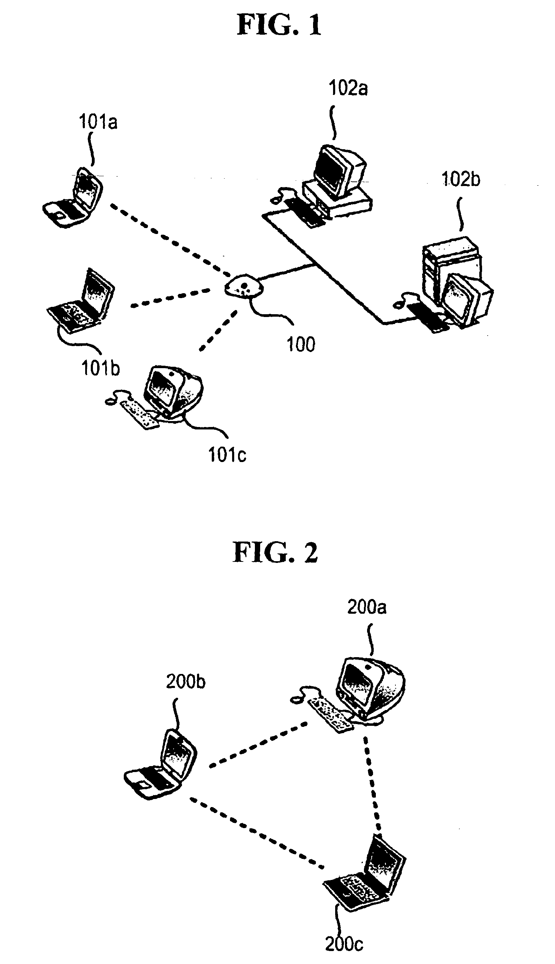

Wireless networks can be classified into two types. One type is a wireless network comprising an access point, as illustrated in FIG. 1, which is referred to as an "infrastructure mode wireless network", and the other type is a wireless network without an access point, as illustrated in FIG. 2, which is referred to as a "wireless network of ad-hoc mode." In the wireless network depicted in FIG. 2, wireless network devices 200a, 200b, and 200c are connected to each via the wireless network without the access point coordinating them.

FIG. 1 depicts an access point 100 coordinating a number of wireless devices 101a, 101b, and 101c. Moreover, the access point 100 is connected to devices 102a and 102b of a wired network. In the infrastructure mode, an access point manages a schedule regarding data transmission, so as to connect a wireless network to a wired network or perform communications between wireless network apparatuses belonging to a wireless network. Accordingly, all the wireless network apparatuses can transmit and receive data through a channel allocated by the access point. Hereinafter, the type of network in which a coordinator such as the access point is present will be referred to as a "coordinator-based network."

Where a plurality of wireless network apparatuses exist in the coordinator-based network, the coordinator may transmit data to and receive data from each wireless network apparatus by use of a variety of methods for media access.

The recent increasing demand for transmission of large amounts of multimedia data has prompted research on effective data transmission over wireless local area networks (WLANs), which will be described based on the IEEE 802.11 specification (ISO/IEC 8802-11:1999(E) ANSI/IEEE Std 802.11, 1999 edition), incorporated herein by reference, that defines standards for wireless LANs. In IEEE 802.11 specification, the wireless network apparatus is referred to as a "station" and the coordinator is referred to as a "point coordinator."

To transmit a variety of multimedia data, improvement in performance of the wireless LAN can be accomplished by two methods. One method is to guarantee the QoS (Quality of Service) of a MAC (Media Access Control) level to transmit data within a given period of time based on the current wireless LAN where a single channel is shared by a plurality of stations. The IEEE 802.11e group is making efforts to unify the standards to improve the QoS. The other method is to increase the bandwidth by allowing stations to use multiple channels rather than a single channel in a BSS (Basic Service Set) and to secure a physical channel.

In the conventional IEEE 802.11 MAC protocol, several nodes share a channel through a mechanism known as a carrier sense multiple access/collision avoidance (CSMA/CA). To share a channel, a distributed coordination function (DCF) using a random backoff algorithm in order to decrease the probability of collision can be used. Another mechanism that can be used to share a channel is a point coordinator function (PCF) that designates the sequence of stations that use the channel based on a polling schedule, in which an access point (AP) serves as a point coordinator.

In IEEE 802.11 ad-hoc mode, since there is no AP to coordinate and manage nodes, the channel can be shared using the DCF mechanism. In contrast, in IEEE 802.11 infrastructure mode, since an AP serves as a point coordinator, the PCF mechanism (whereby a channel can be used without contention) can be used in addition to the DCF mechanism.

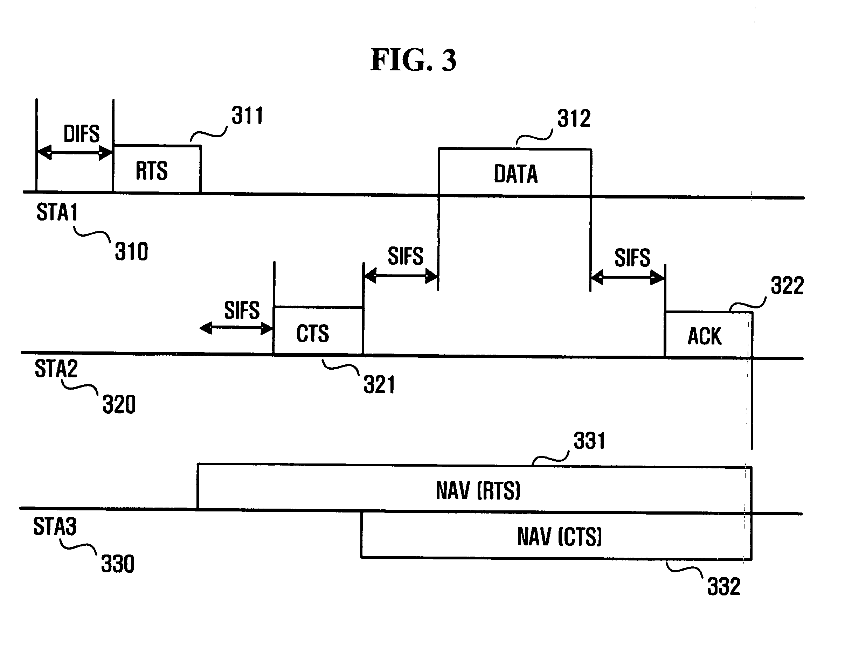

FIG. 3 illustrates transmission of data between stations according to DCF rules. A transmitting station STA1 310 sends a Request to Send (RTS) frame 311 to a receiving station STA2 320 before transmitting data, and ascertains whether the receiving station STA2 320 present in the same BSS is available for receiving data. Since the STA2 320 can receive the frame, it sends a Clear to Send (CTS) frame 321, which is a control frame, to the STA1 310, in order to represent that data 312 may be transmitted because the receiving station STA2 320 is available to receive data. When the STA1 310 receives the CTS frame 321, the STA1 310 transmits the data 312 to the STA2 320. In this chain of processes, the stations other than the STA1 310 and STA2 320 that exist in the same BSS such as a station STA3 330, set their network allocation vector (NAV) and do not transmit data, assuming that the channel is busy during the periods 331 and 332.

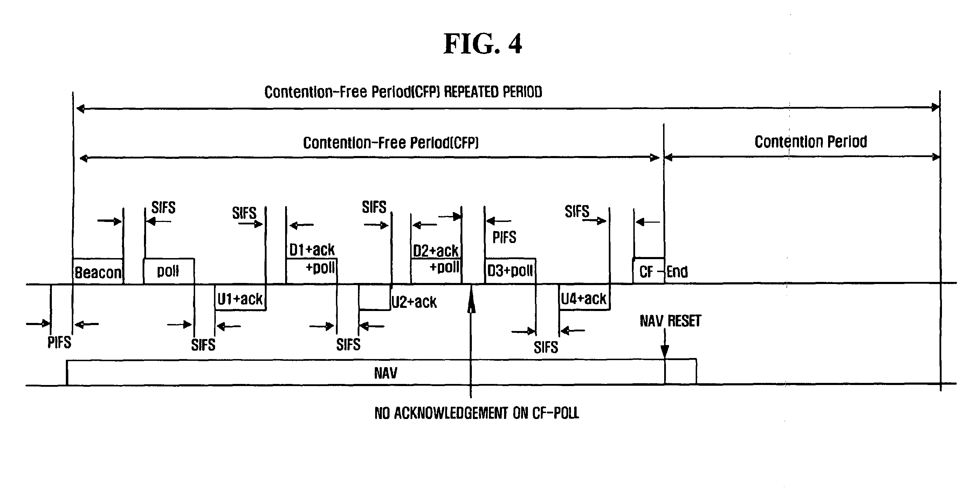

FIG. 4 illustrates transmission of data between stations according to the rules of the PCF. Generally, the PCF is used with the DCF. A DCF area starts where a PCF area ends, thereby constituting as a whole a single repeated area (a contention-free period (CFP) repeated). In FIG. 4, D1, D2 and the like refer to frames transmitted from a point coordinator, and U1, U2 and the like refer to frames transmitted from stations having received polls. A contention-free period (CFP) observing PCF rules begins when the point coordinator first transmits a beacon. A polling operation that the point coordinator present in an AP uses to inquire whether any stations have data to transmit is progressed in a round-robin manner by each station. When the point coordinator conducts a poll, the station having received the poll transmits data and an acknowledgement (ACK) to the point coordinator. Then, the point coordinator transmits the data and the ACK to the target station, and polls the station to receive data. The station having received the poll transmits another ACK to the point coordinator, along with any data to be transmitted. In this manner, data is received and transmitted between stations during a contention-free period. The contention-free period ends when the point coordinator begins transmitting a CF-End frame to the station. The NAV values in the beacon frame are set so that each station does not operate independently but is controlled by the point coordinator during the contention-free period.

However, a problem can occur when large amounts of multimedia data are transmitted.

As in the DCF mechanism, using a channel through a contention may cause a collision when data is transmitted between stations, and a binary random backoff algorithm used to prevent this collision may generate a delay for a considerably long period of time depending on the situation. Although it may be possible to maintain the transmission speed, multimedia data such as moving pictures for a high definition television (HTDV) may be unreliable.

To obviate these shortcomings, the PCF mechanism has been proposed. However, in the PCF mechanism, the polling operations need to be conducted for all the stations according to the created polling list, even for station(s) that do not have data to transmit, thereby generating unnecessary overhead. Further, since it is difficult to make a schedule in proportion to the amount of data to be transmitted, because of the inherent property of polling, it may also be difficult to secure the quality of transmission of large amounts of multimedia data in an environment where several stations operate simultaneously. In addition, because of the inherent complexity of the PCF mechanism, and with the lack of unified standards, the PCF mechanism has not been implemented in commercial products, and stations operate only using the DCF mechanism, which is a common contention mechanism.

Recently, the IEEE 802.11e specification (draft 6.0) has been proposed to supplement the weak QoS of the IEEE 802.11 wireless LAN specification.

A method of improving QoS in IEEE 802.11e basically allows a point coordinator to manage the time to use a channel and the order in which nodes transmit data. That is, each node is allocated a priority according to the type of data to be transmitted, and the order of polling is determined according to the priority, or it is determined according to channel contention. Each node that wants to use the channel is allocated time to use the channel, which is known as a transmission opportunity (TXOP), from the point coordinator, and the node transmits data during this TXOP, thereby overcoming the problem that only one frame is transmitted in IEEE 802.11 standards and supporting the transmission of multiple frames. However, the method described in IEEE 802.11e may increase complexity in transmitting data..

The present invention has been proposed to solve the problems described above.

Accordingly, the present invention provides a mechanism for transmission of large-sized multimedia data, where the quality of transmission is secured more reliably, in an infrastructure mode wireless network environment, wherein a channel for data transmission is allocated by a coordinator.

The present invention will not be limited to the technical aspect described above. Other aspects not described herein will be more definitely comprehended by those in the art from the following detailed description.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 illustrates an infrastructure mode wireless network system;
FIG. 2 illustrates an ad-hoc mode wireless network system;
FIG. 3 illustrates data transmission between stations, according to conventional DCF rules;
FIG. 4 illustrates data transmission between stations, according to conventional PCF rules;
FIG. 5 illustrates data transmission between stations, according to an exemplary embodiment of the present invention;
FIG. 6 is a flow chart illustrating an access point setting the value of the DurationID by referencing a CFP flag, according to an exemplary embodiment of the present invention;
FIG. 7 illustrates channel occupation when a beacon frame is transmitted, according to an exemplary embodiment of the present invention;
FIG. 8 is a flow chart illustrating the setting of a parameter to occupy a channel when a beacon frame is transmitted, according to an exemplary embodiment of the present invention;
FIG. 9 illustrates a queuing structure to set a CFP flag, according to an exemplary embodiment of the present invention; and
FIG. 10 is a flow chart to set a CFP flag, according to an exemplary embodiment of the present invention.

Subject matter of the embodiments will be covered by the detailed description and drawings of the present invention.

Advantages and features of the present invention and methods of accomplishing the same may be understood more readily by reference to the following detailed description of the exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Same reference numerals refer to analogous elements throughout the specification.

Hereinafter, the wireless data transmitting method according to exemplary embodiments of the present invention will be described, referring to block diagrams and flow charts illustrated in the accompanying drawings. Combinations of each block of the flow chart diagrams and entire flow charts can be executed by computer program instructions. Since these computer program instructions may be installed on general purpose computers, special purpose computers or other programmable data processing equipment, any tool can be constructed so that the instructions performed through computers or processors of other programmable data processing equipment can generate means to perform functions described in the flow charts and/or blocks. These computer program instructions may be stored in computer usable/readable memories to implement the functions.
The instructions stored in the computer usable or computer readable memories may be manufactured as products including instruction means to perform functions described in the flow charts and blocks. The computer program instructions may be installed on computers or other programmable data processing equipment. The instructions creating processes performed by computers by executing a series of operations on the computers or other programmable data processing equipment and operating the computers, or other programmable data processing equipment may also supply operations to perform the functions described in the flow charts and/or blocks.

The present invention relates to the continued occupation of a wireless medium for data transmission and reception between specific wireless networking apparatuses, without performing frame fragmentation in a contention-free period of a channel for data transmission and reception that is managed by an access point, in an infrastructure mode wireless network environment. To describe the exemplary embodiment of the present invention more easily, the PCF mode of the IEEE 802.11 specification will be used by way of an example. In describing the exemplary, non-limiting embodiment of the present invention, the terms defined by the IEEE 802.11 specification will be used. A station (STA) controlling the PCF mode will serve as an access point, and the length of a data frame used to compute the value of a DurationID is equivalent to the size of the maximum data frame (2304 bytes), because the data size of the next frame to be transmitted cannot be known.

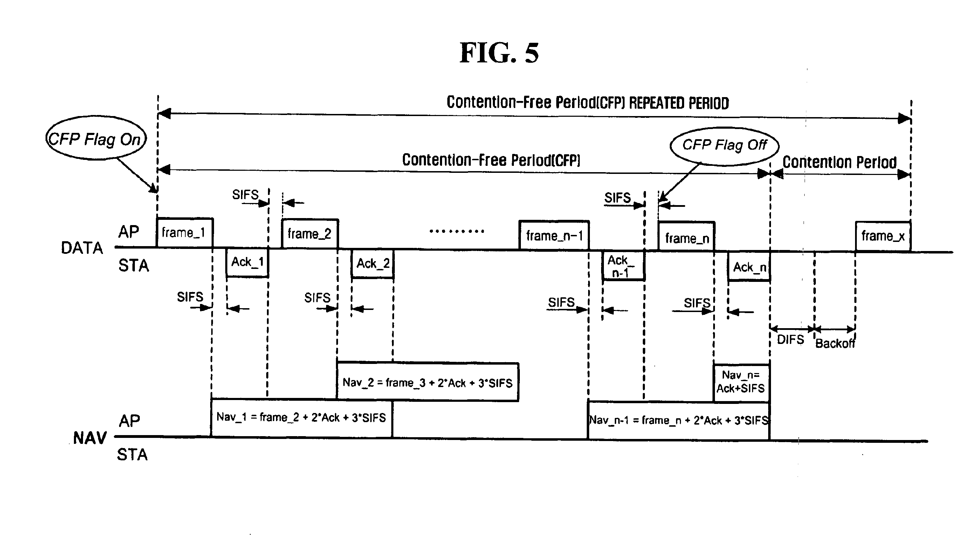

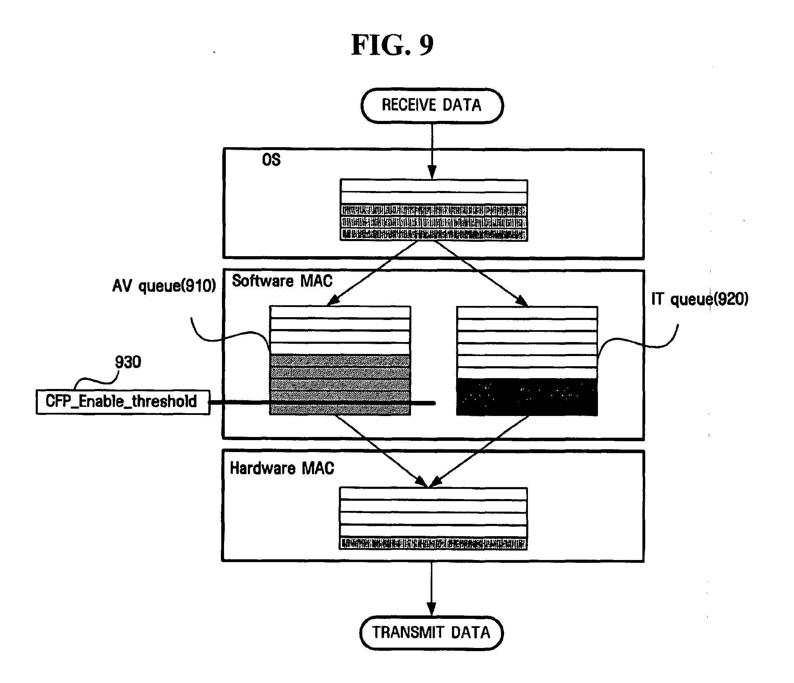

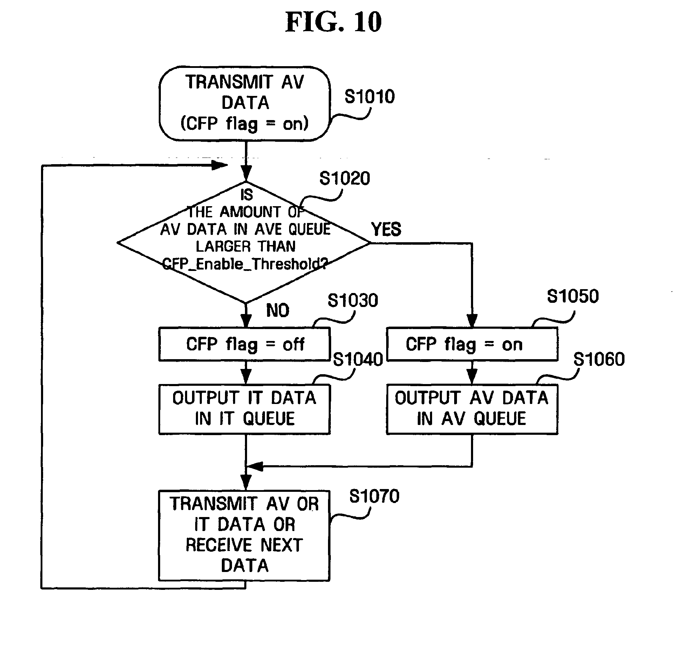

FIG. 5 illustrates wireless data transmission according to an exemplary embodiment of the present invention. According to an upper layer or a state of the queue (described in greater detail with reference to FIGS. 9 and 10), an access point determines to occupy its own channel and exclusively transmits real-time data such as audio/video streams to a specific station (STA). To transmit the real-time data, the access point sets a CFP flag to "on" and then enters a CFP mode. The CFP flag may be processed as a parameter to indicate whether the access point is in a PCF mode. The CFP flag may be stored in a memory within the access point.

When the access point is in the CFP mode, the data frame after conversion does not follow the backoff procedure and is transmitted in the unit of SIFS (Short Interframe Space), and the DurationID in the header of the MAC frame is set, as described in greater detail below.

When transmitting a first data frame (frame_1) to a station (STA), the access point sets its DurationID to be long enough to secure transmission of the next frame (frame_2 + 2*Ack + 3*SIFS), as if a frame is fragmented. By doing so, stations (STAs) cannot use the channel until transmission of the next data frame is completed. The access point can avoid contention, with holding complete ownership of the wireless medium. The durationID value may be channel occupation information for the access point to continuously occupy a channel.

When the access point intends to occupy its own channel continuously, it sets its DurationID value in the MAC header as described above during the transmission of a data frame.

In this process, other stations (STAs) determine, based on a NAV value, that the channel is still busy, and thus, they do not try to use the channel.

When the access point makes a decision to go far out of the contention-free period, the access point sets the CFP flag to "off" (from "on"). After that, the access point sets the DurationID value only with time (Ack + SIFS) to receive an acknowledgement (Ack) on receipt of the last data frame, and then transmits the data frame.

When receiving the acknowledgement (Ack) from a station (STA), the access point converts its mode to a contention period (CP) mode and follows the backoff procedure with respect to data frames to be transmitted after the conversion. Accordingly, the DurationID value is set to "Ack + SIFS."

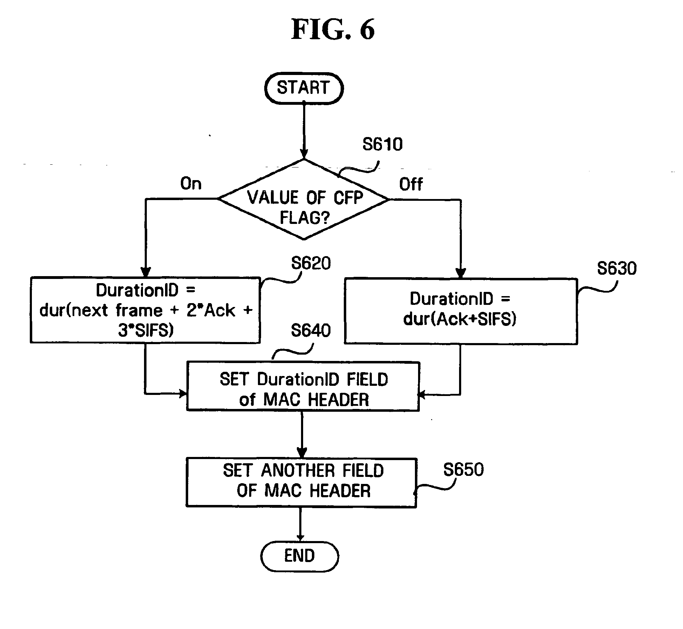

FIG. 6 is a flow chart illustrating an access point setting the value of the DurationID by referencing a CFP flag, according to an exemplary embodiment of the present invention.

First, an access point checks the CFP flag value to ascertain its value, S610.

When the CFP flag value is set to "on," the DurationID field of the MAC header is set to the value: dur(next frame + 2*Ack + 3*SIFS) at S620 and S640. Dur(x) refers to the time consumed in transmitting (or processing) x. When the CFP flag is set to "off," the DurationID field of the MAC header is set to: dur(ACK + SIFS), as detailed in IEEE 802.11a at S630 and S640. After setting the DurationID, the access point sets another field of the MAC header S650.

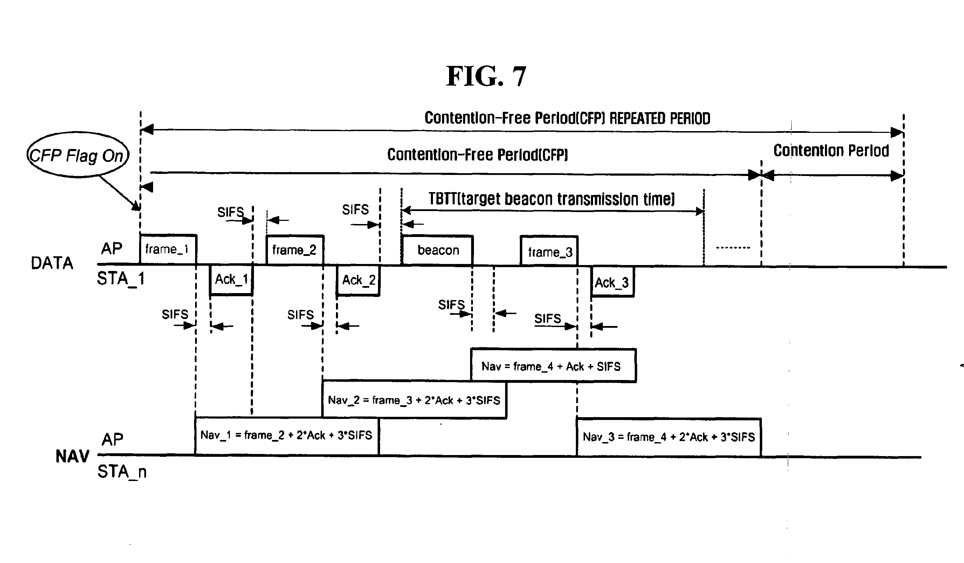

FIG. 7 illustrates channel occupation when a beacon frame is transmitted, according to an exemplary embodiment of the present invention.

A beacon frame refers to a frame periodically broadcasted by the access point for time synchronization in a relevant BSS of an infrastructure mode wireless network environment. To broadcast a beacon frame in the contention-free period, the access point first broadcasts the beacon frame, and then the next data frame. The access point should continuously maintain a channel, secured in advance - prior to broadcasting a beacon frame, so as to transmit the data frames that were not yet transmitted.

As illustrated in FIG. 7, a NAV value set by frame_2 is: dur(frame_3 + 2*Ack + 3*SIFS). When an event of a target beacon transmission time (TBTT) occurs, after the STA_1 has received frame_2, the access point broadcasts the beacon frame, instead of transmitting frame_3.

When frame_3 is to be transmitted, after having broadcasted the beacon frame, the remaining occupation time will be dur(Ack + α), where α = dur (frame_3 having the length of 2304 bytes) - dur(beacon frame having the maximum length of 500 bytes).

Since the NAV value, that is, dur(Ack + α), is still effective in the current BSS, other stations (STAs) do not enter into the contention period to perform DIFS (Distribute Interframe Space) and Backoff, instead they wait until the NAV value becomes 0.

However, there is no guarantee that the time consumed when an access point transmits frame_3 is always less than dur (Ack + α). If the NAV value becomes 0 before frame_3 reaches a destination station (STA), other stations (STAs) enter into the contention period, and may acquire a channel after the backoff.

To prevent this phenomenon, the access point first checks its CFP flag in order to transmit a beacon frame. When the CFP flag is "on," the access point sets dur(frame_4 + 2*Ack + 3*SIFS) in the CFP Max Duration field of the beacon frame to thereby compensate the NAV value consumed for transmission of the beacon frame.

Transmission of frame_3 to STA_1 is guaranteed during dur(frame_4 + 2*Ack + 3*SIFS) set in the beacon frame, and stations in the current BSS are controlled by the Nav_3 value transmitted by frame_3, and thus, the access point can continuously occupy the channel.

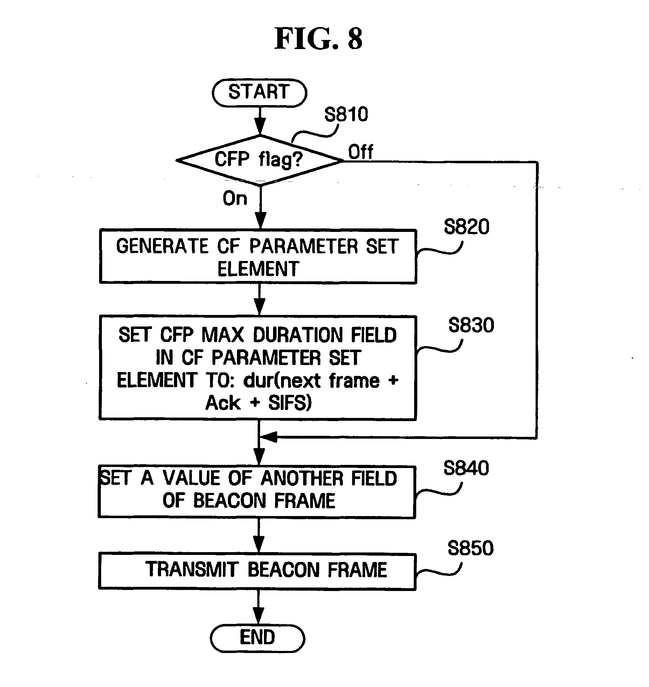

FIG. 8 is a flow chart to set a parameter in order to occupy a channel when a beacon frame is transmitted, according to an exemplary embodiment of the present invention.

At first, when an event of TBTT occurs, the access point checks the value of the CFP flag S810. If the value of CFP flag is "on," the access point generates a CF parameter set element to be set in a payload of the beacon frame S820. Thereafter, the CFP Max Duration field in the generated CF Parameter Set element is set to the value: dur(next frame + Ack + SIFS) S830. The access point sets a value of another field required by the beacon frame S840, and broadcasts the beacon frame S850. When the value of the CFP is "off" in step S820, the access point directly moves to step S840, skipping steps S820 and S830.

There may be various methods whereby the access point sets the value of the CFP. However, a method of setting the CFP flag using a queue memory structure will be described below.

FIG. 9 illustrates a queuing structure to set a CFP flag according to an exemplary embodiment of the present invention, and FIG. 10 is a flow chart to set a CFP flag according to an exemplary embodiment of the present invention. Hereinafter, the audio/video multimedia data stream will be referred to as an "AV data" and data other than the AV data will be referred to as an "IT data."

It is assumed that the value of the CFP flag is currently "on," and the access point transmits the AV data to a specific station in the contention-free period S1010 of FIG. 10.

An OS (Operating System) of the access point receives data through its own medium or another medium, and ascertains the type of data. When the received data is the AV data, it is inserted into an AV queue 910 and when the received data is the IT data, it is inserted into an IT queue 920. The AV queue 910 and the IT queue 920 may be implemented using software in the MAC layer.

The OS of the access point or a module to manage the memory checks the state of the AV queue and then checks whether the amount of the AV data in the AV queue 910 is larger than the value of CFP_Enable_Threshold 930 of FIG. 9, as depicted in S1020 of FIG. 10. When the value of CFP_Enable_Threshold 930 is too large or small, a transmission of the IT data may be cut off or movement between the AV queue 910 and the IT queue 920 may be frequent, and thus, an appropriate value of CFP_Enable_Threshold 930 may be experimentally determined.

In step S1020 of FIG. 10, when the amount of data in the AV queue 910 is larger than CFP_Enable_Threshold 930, the CFP flag is set to "on" S1050 and the AV data is output from the AV queue S1060.

In step 1020, when the amount of data in the AV queue 910 is smaller than CFP_Enable_Threshold 930, the CFP flag is set to "off" S1030 and the IT data is output from the IT queue S1040.

Thereafter, the outputted data is transmitted to a station (STA) through the MAC layer (embodied with hardware as depicted in FIG. 9). The OS of the access point receives data through its own medium or another medium and performs step S1020 after S1070.

The exemplary embodiment of the present invention is effective since the access point can transmit large amounts of multimedia data, without performing the frame fragmentation in the contention-free period. By continuously occupying a wireless medium of an infrastructure mode wireless network environment, the quality and reliability of the transmission can be secured.

Although a few preferred embodiments have been shown and described, it will be appreciated by those skilled in the art that various changes and modifications might be made without departing from the scope of the invention, as defined in the appended claims.

## Claims

1. A wireless data transmitting method through wireless network communications using an access point in an infrastructure mode including a contention-free period, comprising:
operating the access point during a contention-free period thereof;
generating, with the access point, a first data frames to occupy a channel; said first data frame comprising channel occupation information of a second data frame; wherein said channel occupation information represents a time duration where the channel will be continuously occupied, to secure transmission; transmitting said first data frame to a designated wireless network apparatus;
operating the wireless networking apparatus to transmit an acknowledgement frame acknowledging receipt of the first data frame to the access point; and
releasing the access point from the contention-free period wherein said releasing the access point from the contention-free period comprises:
transmitting, by the access point, the second data frame to the wireless network apparatus, wherein the second data frame comprises the channel occupation information set according to an acknowledgement frame information and a frame interval information; and
transmitting to the access point, by the wireless network apparatus, another acknowledgement frame acknowledging receipt of the second data frame;
**characterised in that** operating in a contention-free period comprises:
determining an amount of audio/video stream data currently stored in a memory of the access point; and
operating the access point to occupy its own channel and to exclusively transmit the audio/video stream data to a specific station in the contention-free period when the amount of data exceeds a predetermined reference amount.

2. The method of claim 1, further comprising structuring data frames including the first and second data frames according to IEEE 802.11 specification.

3. The method of claim 2, further comprising setting the channel occupation information in a duration field, DurationID, of a Medium Access Control,MAC, header.

4. The method of any preceding claim, further comprising setting the channel occupation information based on information in the second data frame, information in the acknowledgement frame and frame interval information of the wireless network apparatus.

5. The method of claim 4, wherein the frame interval information comprises Short Interframe Space, SIFS, information defined in IEEE 802.11 specification.

6. The method of any preceding claim, wherein the memory comprises a queuing structure.

7. The method of any preceding claim, wherein the frame interval information comprises SIFS information, and wherein format of the SIFS information is defined in IEEE 802.11 specification.

8. The method of claim 2, wherein the transmitting by the wireless network apparatus the acknowledgement frame to the access point comprises:
including channel occupation information for a third data frame in a beacon frame, where the third data frame is transmitted sequentially to occupy a channel, when the access point broadcasts the beacon frame;
including channel occupation information for the third data frame to occupy a channel in the second data frame, when the access point broadcasts the second data frame to the wireless network apparatus; and
transmitting by the wireless network apparatus an acknowledgement frame of receipt of the second data frame to the access point.

9. The method of claim 8, further comprising setting the channel occupation information in a DurationID field of the MAC header.

10. The method of claim 8, further comprising setting the channel occupation information for the third data frame to occupy a channel based on a third data frame information, an acknowledgement frame information and a frame interval information of the wireless network apparatus.

11. The method of claim 10, wherein the frame interval information comprises SIFS information, and wherein the structure of the SIFS information is defined in the IEEE 802.11 specification.

## Patentansprüche

1. Verfahren zur drahtlosen Datenübertragung über die Kommunikation in einem drahtlosen Netzwerk mit einem Zugriffspunkt (Access Point) in einem Infrastrukturmodus, der eine Zeitspanne ohne Zugriffskonftikte (Contention-free) enthält, das aufweist:
Betreiben des Zugriffspunkts während einer Zeitspanne ohne Zugriffskonflikte davon;
Generieren eines ersten Datenrahmens (Data Frame) durch den Zugriffspunkt, um den Kanal zu belegen; wobei der erste Datenrahmen Kanalbelegungsinformation eines zweiten Datenrahmens aufweiset; wobei die Kanalbelegungsinformation eine Zeitspanne darstellt, während der der Kanal fortlaufend besetzt ist, um die Übertragung sicherzustellen; Übertragen des ersten Datenrahmens an eine angegebene drahtlose Netzwerkeinrichtung;
Betreiben der drahtlosen Netzwerkeinrichtung, um einen Bestätigungsrahmen zu übertragen, der dem Zugriffspunkt den Empfang des ersten Datenrahmens bestätigt; und
Freigeben des Zugriffspunkts aus der Zeitspanne ohne Zugriffskonflikte, wobei das Freigeben des Zugriffspunkts aus der Zeitspanne ohne Zugriffskonflikte aufweist:
Übertragen des zweiten Datenrahmens an die drahtlose Netzwerkeinrichtung durch den Zugriffspunkt, wobei der zweite Datenrahmen die Kanalbelegungsinformation, die gemäß einer Bestätigungsrahmeninformation festgelegt ist, und eine Rahmenintervallinformation aufweist, und
Übertragen eines weiteren Bestätigungsrahmens, der den Empfang des zweiten Datenrahmens bestätigt, durch die drahtlose Netzwerkeinrichtung an den Zugriffspunkt;
**dadurch gekennzeichnet, dass** der Betrieb in einer Zeitspanne ohne Zugriffskonflikte aufweist:
Bestimmen der Menge an Audio/Video-Streamdaten, die aktuell in einem Speicher des Zugriffspunkts gespeichert sind; und
Betreiben des Zugriffspunkts, um einen eigenen Kanal zu belegen und die Audio/Video-Streamdaten exklusiv an eine bestimmte Station in der Zeitspanne ohne Zugriffskonflikte zu übertragen, wenn die Menge der Daten eine bestimmte Referenzmenge überschreitet.

2. Verfahren gemäß Anspruch 1, weiterhin strukturierende Datenrahmen aufweisend, die erste und zweite Datenrahmen gemäß der IEEE 802.11-Spezifikation enthalten.

3. Verfahren gemäß Anspruch 2, weiterhin aufweisend das Einstellen der Kanalbelegungsinformation in einem die Dauer angebenden Feld, DurationID, eines MAC (Medium Access Control-)-Headers.

4. Verfahren gemäß einem der vorhergehenden Ansprüche, weiterhin das Einstellen der Kanalbelegungsinformation basierend auf Information im zweiten Datenrahmen, auf Bestätigungsrahmeninformation und Rahmenintervallinformation der drahtlosen Netzwerkeinrichtung umfassend.

5. Verfahren gemäß Anspruch 4, wobei die Rahmenintervallinformation SIFS-(Short Interframe Space-)Information umfasst, die in der IEEE 802.11 - Spezifikation definiert sind.

6. Verfahren gemäß einem der vorhergehenden Ansprüche, wobei der Speicher eine Warteschlangenstruktur (Queuing Structure) aufweist,

7. Verfahren gemäß einem der vorhergehenden Ansprüche, wobei die Rahmenintervallinformation SIFS-Information aufweist und wobei das Format der SIFS-Information in der IEEE 802.11-Spezifikation definiert ist.

8. Verfahren gemäß Anspruch 2, wobei das Übertragen des Bestätigungsrahmens an den Zugriffspunkt durch die drahtlose Netzwerkeinrichtung aufweist:
Aufnehmen von Kanalbelegungsinformation für einen dritten Datenrahmen in einem Beacon-(Leuchtfeuer-)Rahmen, wobei der dritte Datenrahmen sequenziell übertragen wird, um einen Kanal zu belegen, wenn der Zugriffspunkt den Beacon-Rahmen sendet;
Aufnahmen der Kanalbelegungsinformation für einen dritten Datenrahmen, um einen Kanal im zweiten Datenrahmen zu belegen, wenn der Zugriffspunkt den zweiten Datenrahmen an die drahtlose Netzwerkeinrichtung sendet; und
Übertragen durch die drahtlose Netzwerkeinrichtung eines Bestätigungsrahmens des Empfangs des zweiten Datenrahmens an den Zugriffspunkt;

9. Verfahren gemäß Anspruch 8, weiterhin das Festlegen der Kanalbelegungsinformation in einem DurationID-Feld des MAC-Headers aufweisend.

10. Verfahren gemäß Anspruch 8, weiterhin aufweisend das Einstellen der Kanalbelegungsinformation für den dritten Datenrahmen, um einen Kanal basierend auf Information im dritten Datenrahmen, auf Bestätigungsrahmeninformation und auf Rahmenintervallinformation der drahtlosen Netzwerkeinrichtung zu belegen.

11. Verfahren gemäß Anspruch 10, wobei die Rahmenintervallinformation SIFS-Information umfasst, und wobei die Struktur der SIFS-Information in der IEEE 802.11 -Spezifikation definiert ist.

## Revendications

1. Procédé de transmission de données sans fil via des communications réseau sans fil en utilisant un point d'accès dans un mode d'infrastructure incluant une période sans conflit, comportant les étapes consistant à :
mettre en fonctionnement le point d'accès pendant une période sans conflit de celui-ci,
générer, à l'aide du point d'accès, une première trame de données afin d'occuper un canal, ladite première trame de données comportant des informations d'occupation de canal d'une deuxième trame de données, lesdites informations d'occupation de canal représentant une durée au cours de laquelle le canal sera continuellement occupé, pour sécuriser la transmission,
transmettre ladite première trame de données à un dispositif de réseau sans fil désigné,
mettre en fonctionnement le dispositif de réseau sans fil pour transmettre une trame d'acquittement accusant réception de la première trame de données au point d'accès, et
libérer le point d'accès de la période sans conflit, ladite libération du point d'accès de la période sans conflit comportant les étapes consistant à :
transmettre, par l'intermédiaire du point d'accès, la deuxième trame de données au dispositif de réseau sans fil, la deuxième trame de données comportant les informations d'occupation de canal établies conformément à des informations de trame d'acquittement et à des informations d'intervalle de trames et
transmettre au point d'accès, par l'intermédiaire du dispositif de réseau sans fil, une autre trame d'acquittement accusant réception de la deuxième trame de données,
**caractérisé en ce que** la mise en fonctionnement au cours d'une période sans conflit comporte les étapes consistant à :
déterminer une quantité de données de flux audio/vidéo actuellement mémorisées dans une mémoire du point d'accès, et
mettre en fonctionnement le point d'accès pour occuper son propre canal et pour transmettre exclusivement les données de flux audio/vidéo à une station spécifique au cours de la période sans conflit lorsque la quantité de données dépasse une quantité de référence prédéterminée.

2. Procédé selon la revendication 1, comportant en outre la structuration de trames de données incluant les première et deuxième trames de données conformément à la spécification IEEE 802.11.

3. Procédé selon la revendication 2, comportant en outre l'établissement des informations d'occupation de canal dans un champ de durée, IDdurée, d'un en-tête de contrôle d'accès au support, MAC.

4. Procédé selon l'une quelconque des revendications précédentes, comportant en outre l'établissement des informations d'occupation de canal sur la base des informations dans la deuxième trame de données, des informations dans la trame d'acquittement et des informations d'intervalle de trame du dispositif de réseau sans fil.

5. Procédé selon la revendication 4, dans lequel les informations d'intervalle de trame comportent des informations SIFS, Bref Espace Intertrame, définies dans la spécification IEEE 802.11.

6. Procédé selon l'une quelconque des revendications précédentes, dans lequel la mémoire comporte une structure de mise en file d'attente.

7. Procédé selon l'une quelconque des revendications précédentes, dans lequel les informations d'intervalle de trame comportent des informations SIFS, et dans lequel le format des informations SIFS est défini dans la spécification IEEE 802.11.

8. Procédé selon la revendication 2, dans lequel la transmission par le dispositif de réseau sans fil de la trame d'acquittement au point d'accès comporte les étapes consistant à :
inclure des informations d'occupation de canal pour une troisième trame de données dans une trame de balise, la troisième trame de données étant transmise séquentiellement pour occuper un canal, lorsque le point d'accès diffuse la trame de balise,
inclure des informations d'occupation de canal pour la troisième trame de données afin d'occuper un canal dans la deuxième trame de données, lorsque le point d'accès diffuse la deuxième trame de données au dispositif de réseau sans fil, et
transmettre par l'intermédiaire du dispositif de réseau sans fil une trame d'acquittement de réception de la deuxième trame de données au point d'accès.

9. Procédé selon la revendication 8, comportant en outre l'établissement des informations d'occupation de canal dans un champ IDdurée de l'en-tête MAC.

10. Procédé selon la revendication 8, comportant en outre l'établissement des informations d'occupation de canal pour la troisième trame de données afin d'occuper un canal sur la base d'informations de la troisième trame de données, d'informations de la trame d'acquittement et d'informations d'intervalle de trame du dispositif de réseau sans fil.

11. Procédé selon la revendication 10, dans lequel les informations d'intervalle de trame comportent des informations SIFS, et dans lequel la structure des informations SIFS est définie dans la spécification IEEE 802.11.
